# DEMANDE DE BREVET EUROPEEN

(11) **EP 4 340 423 A1**
(43) Date de publication de la demande: **20.03.2024**
(21) Numéro de dépôt: 23196037.8
(22) Date de dépôt: 07.09.2023
(51) Int. Cl.: H04W 12/069, H04W 12/50

(54) **PROCÉDÉ D'APPAIRAGE ENTRE UN DISPOSITIF HÔTE ET UN DISPOSITIF PÉRIPHÉRIQUE**

(30) Priorité: 16.09.2022 FR 2209362
(71) Demandeur: STMicroelectronics (Rousset) SAS, 13790 Rousset (FR); PROTON WORLD INTERNATIONAL N.V., 1831 Diegem (BE)
(72) Inventeur: FARISON, Denis, 13100 LE THOLONET (FR); DELCLEF, Joris, 9420 AAIGEM (BE)
(74) Mandataire: Cabinet Beaumont

(57) **Abrégé**

La présente description concerne un procédé d'appairage entre un premier dispositif hôte (100) et un premier dispositif périphérique (102), comprenant :
- faire entrer, par un utilisateur du premier dispositif hôte, une valeur de vérification ;
- la comparaison, par le premier dispositif périphérique, entre la valeur de vérification et une première valeur secrète stockée dans une mémoire (128, 150) du premier dispositif périphérique ; et
- si la valeur de vérification correspond à la première valeur secrète, le calcul et le stockage d'une première clef d'appairage par le premier dispositif hôte et le premier dispositif périphérique afin d'effectuer l'appairage.

## Description

### Domaine technique

La présente description concerne de façon générale le domaine de l'appairage entre deux dispositifs, plus particulièrement entre un dispositif hôte et un dispositif périphérique.

### Technique antérieure

Dans certaines applications, le fonctionnement d'un dispositif est conditionné au couplage avec un dispositif périphérique. C'est par exemple le cas pour des véhicules électriques tels que des vélos électriques, des scooters électriques, ou encore des trottinettes électriques, etc., pour lesquels une batterie est connectée afin d'alimenter le véhicule et permettre son fonctionnement. C'est aussi, par exemple, le cas pour des automobiles pour lesquelles des pièces ou périphériques pouvant être détachés permettent le fonctionnement de certains équipements.

Cependant, le dispositif périphérique est généralement couteux et est sujet aux vols. Il existe un problème technique pour protéger de tels dispositifs périphériques du vol sans ajouter de contraintes techniques supplémentaires à un utilisateur.

### Résumé de l'invention

Il existe un besoin d'améliorer la protection des dispositifs périphériques permettant le fonctionnement d'autres dispositifs.

Un mode de réalisation pallie tout ou partie des inconvénients des méthodes de protections connues.

Un mode de réalisation prévoit un procédé d'appairage entre un premier dispositif hôte et un premier dispositif périphérique, comprenant :
- faire entrer, par un utilisateur du premier dispositif hôte, une valeur de vérification ;
- la comparaison, par le premier dispositif périphérique, entre la valeur de vérification et une première valeur secrète stockée dans une mémoire du premier dispositif périphérique ; et
- si la valeur de vérification correspond à la première valeur secrète, le calcul et le stockage d'une première clef d'appairage par le premier dispositif hôte et le premier dispositif périphérique afin d'effectuer l'appairage.

Selon un mode de réalisation, le procédé ci-dessus comprend en outre, si la valeur de vérification correspond à la première valeur secrète, l'établissement d'un canal sécurisé entre le premier dispositif périphérique et le premier dispositif hôte.

Selon un mode de réalisation, le procédé ci-dessus comprend, suite à l'appairage du premier dispositif hôte avec le premier dispositif périphérique :
- le placement du premier dispositif périphérique dans un état de désactivation ;
- la transmission par le premier dispositif hôte d'une demande d'activation au premier dispositif périphérique, sur la base de la première clef d'appairage ; et
- l'activation du premier dispositif périphérique sur la base d'une vérification de la demande.

Selon un mode de réalisation, le procédé ci-dessus comprend en outre, avant l'entrée de la valeur de vérification, une vérification de l'authenticité du premier dispositif périphérique sur la base d'une valeur d'authenticité.

Selon un mode de réalisation, la première clef d'appairage est générée en parallèle par le premier dispositif périphérique et par le premier dispositif hôte sur la base de la première valeur secrète et/ou de la valeur d'authenticité et est stockée dans un premier emplacement d'une mémoire non volatile du premier dispositif périphérique et dans un premier emplacement d'une mémoire non volatile du premier dispositif hôte.

Selon un mode de réalisation, la première valeur secrète est stockée de manière cryptée dans une mémoire non volatile du premier dispositif périphérique.

Selon un mode de réalisation, la valeur de vérification est un code pin.

Selon un mode de réalisation, la valeur de vérification est une étiquette NFC.

Selon un mode de réalisation, le premier dispositif hôte et le premier dispositif périphérique sont couplés par l'intermédiaire d'un bus de type I2C.

Selon un mode de réalisation, le procédé ci-dessus comprend en outre l'appairage entre le premier dispositif hôte et un deuxième dispositif périphérique, en faisant :
- entrer, par un utilisateur du premier dispositif hôte, une valeur de vérification ;
- la comparaison, par le deuxième dispositif périphérique, entre la valeur de vérification et une deuxième valeur secrète stockée dans une mémoire du deuxième dispositif périphérique ; et
- si la valeur de vérification correspond à la deuxième valeur secrète, le calcul et le stockage d'une deuxième clef d'appairage par le premier dispositif hôte et le deuxième dispositif périphérique afin d'effectuer l'appairage.

Selon un mode de réalisation, le procédé ci-dessus comprend en outre l'appairage entre un deuxième dispositif hôte et le premier dispositif périphérique, en faisant :
- entrer, par un utilisateur du deuxième dispositif hôte, une valeur de vérification ;
- la comparaison, par le premier dispositif périphérique, entre la valeur de vérification et la première valeur secrète ; et
- si la valeur de vérification correspond à la première valeur secrète, le calcul et le stockage d'une troisième clef d'appairage par le deuxième dispositif hôte et le premier dispositif périphérique afin d'effectuer l'appairage.

Un mode de réalisation prévoit un premier dispositif hôte configuré pour :
- transmettre à un dispositif périphérique une valeur de vérification faite entrée par un utilisateur ; et
- calculer et stocker une clef d'appairage afin d'effectuer un appairage entre le premier dispositif hôte et le dispositif périphérique.

Un mode de réalisation prévoit un premier dispositif périphérique configuré pour :
- comparer une valeur de vérification, faite entrée par un utilisateur d'un dispositif hôte, avec une valeur secrète stockée dans une mémoire non volatile du premier dispositif périphérique ;
- si la valeur de vérification correspond à la valeur secrète, calculer et stocker une première clef d'appairage afin d'effectuer un appairage entre le dispositif hôte et le premier dispositif périphérique.

Un mode de réalisation prévoit un système comprenant le premier dispositif hôte ci-dessus et le premier dispositif périphérique ci-dessus.

Selon un mode de réalisation, le système ci-dessus comprend en outre un deuxième dispositif hôte et un deuxième dispositif périphérique, le premier dispositif périphérique étant en outre configuré pour effectuer un appairage avec le deuxième dispositif hôte et le deuxième dispositif périphérique étant en outre configuré pour effectuer un appairage avec le premier dispositif hôte.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma par bloc illustrant un dispositif hôte et un dispositif périphérique selon un mode de réalisation de la présente description ;
la figure 2 est un organigramme illustrant des étapes d'un procédé d'appairage mis en oeuvre par un dispositif hôte selon un mode de réalisation de la présente description ;
la figure 3 est un organigramme illustrant des étapes d'un procédé d'appairage mis en oeuvre par un dispositif périphérique selon un mode de réalisation de la présente description ;
la figure 4A illustre un exemple d'appairage entre une batterie et un vélo selon un mode de réalisation de la présente description ;
la figure 4B illustre un autre exemple d'appairage entre une batterie et un vélo selon un mode de réalisation de la présente description ;
la figure 4C illustre encore un autre exemple d'appairage entre une batterie et un vélo selon un mode de réalisation de la présente description ;
la figure 5A est un schéma par bloc illustrant un exemple d'architecture système selon un mode de réalisation de la présente description ;
la figure 5B est un schéma par bloc illustrant un autre exemple d'architecture système selon un mode de réalisation de la présente description ;
la figure 5C est un schéma par bloc illustrant encore un autre exemple d'architecture système selon un mode de réalisation de la présente description ;
la figure 5D est un schéma par bloc illustrant encore un autre exemple d'architecture système selon un mode de réalisation de la présente description ;
la figure 6A est un schéma par bloc illustrant un exemple d'une unité d'authentification selon un mode de réalisation de la présente description ; et
la figure 6B est un schéma par bloc illustrant un autre exemple de l'unité d'authentification selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le fonctionnement des différents types de cryptographies utilisées, telles que les cryptographies à clefs symétriques ainsi que le fonctionnement des certificats électroniques sont bien connus de la personne du métier et n'ont pas été détaillés dans la description qui suit.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

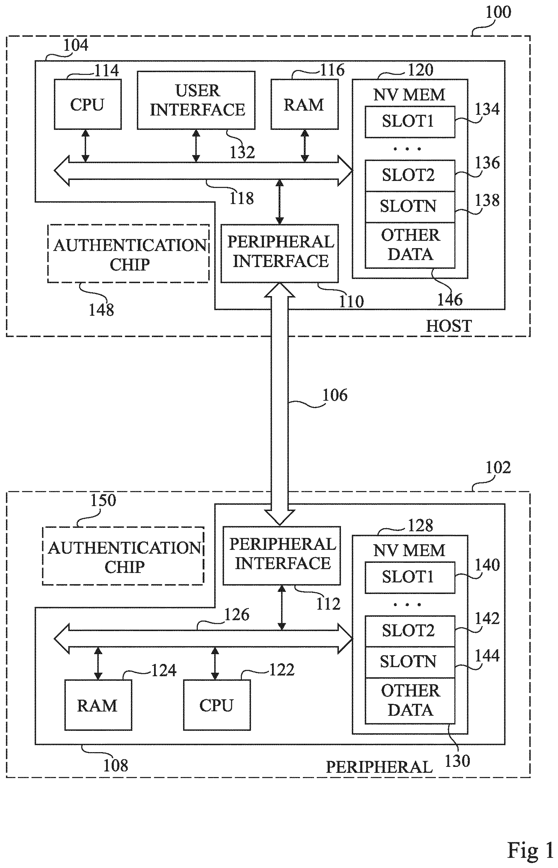

La figure 1 est un schéma par bloc illustrant un dispositif hôte 100 (HOST) et un dispositif périphérique 102 (PERIPHERAL) selon un mode de réalisation de la présente description.

A titre d'exemple, le dispositif hôte 100 est un véhicule électrique tel qu'un vélo électrique, un scooter électrique, une trottinette électrique etc. et le dispositif périphérique 102 est la batterie permettant le fonctionnement du véhicule. Dans un autre exemple, le dispositif hôte 100 est un smartphone et le dispositif périphérique 102 est un accessoire, tel que par exemple des écouteurs sans fils. Encore dans un autre exemples les dispositifs 100 et 102 sont des pièces détachées d'une automobile. Ces exemples ne sont pas limitatifs. De manière générale, les dispositifs 100 et 102 sont deux dispositifs pouvant être appairés. Le dispositif périphérique 102 est par exemple sous le contrôle du dispositif hôte 100 au moins une partie du temps. De plus, le dispositif périphérique 102 est, par exemple, détachable du dispositif hôte 100. Dans de nombreuses applications, le dispositif périphérique 102 est relativement coûteux, et donc même si un mécanisme d'antivol mécanique est prévu pour empêcher le dispositif périphérique 102 d'être détaché du dispositif hôte 100, des tentatives de vols sont toujours un risque. A titre d'exemple, dans le cas de vélos électriques, où le dispositif hôte 100 est le vélo avec moteur, et le dispositif périphérique 102 est une batterie alimentant le moteur, la valeur du dispositif périphérique 102 peut être de l'ordre de la moitié du prix du dispositif hôte 100.

Une solution pour dissuader le vol du dispositif périphérique 102 est de rendre ce dispositif périphérique 102 non-utilisable dans d'autres dispositifs hôtes. Cependant il est important que la protection contre le vol du dispositif périphérique 100 n'empêche pas toute possibilité d'utilisation du dispositif hôte 100 et du dispositif périphérique 102 par l'utilisateur. A titre d'exemple, l'utilisateur peut vouloir utiliser, de manière alternative, deux dispositifs périphériques 102 avec un même dispositif hôte 100. De même, l'utilisateur peut par exemple vouloir appairer un même dispositif périphérique 102 avec différents dispositifs hôtes 100. L'utilisateur peut aussi par exemple vouloir avoir la possibilité de revendre un dispositif périphérique 102 lui appartenant.

A titre d'exemple, le dispositif hôte 100 comprend une unité de traitement 104 couplée, par l'intermédiaire d'un bus 106, à une unité de traitement 108 du dispositif périphérique 102. A titre d'exemple, chaque unité de traitement 104 et 108 comprend respectivement une interface périphérique 110 et 112 (PERIPHERAL INTERFACE) couplée au bus 106.

A titre d'exemple, le bus 106 est un bus de type I2C (de l'anglais « Inter Integrated Circuit »). Dans un autre exemple, le couplage entre les unités de traitement 104 et 108 est par exemple réalisé par une connexion sans fil, telle que par exemple par Bluetooth, par communication en champ proche (NFC, de l'anglais "Near-Field Computing"), ou par connexion fidélité sans fil (WiFi, de l'anglais "Wireless Fidelity"), où le dispositif hôte 100 ou le dispositif périphérique 102 est par exemple le point d'accès sans fil (en anglais « wireless hotspot").

L'unité de traitement 104 comprend par exemple un processeur 114 (CPU) ainsi qu'une mémoire volatile 116 (RAM) couplés par exemple par l'intermédiaire d'un bus système 118. A titre d'exemple, la mémoire volatile 116 est une mémoire à accès aléatoire (en anglais « random Accès Memory »).

L'unité de traitement 104 comprend en outre, par exemple, une mémoire non volatile 120 (NV MEM), par exemple une mémoire de type Flash, couplée au bus système 118.

L'unité de traitement 108 du dispositif périphérique 102 comprend, par exemple, également un processeur 122 (CPU), ainsi qu'une mémoire volatile 124 (RAM), par exemple couplés par l'intermédiaire d'un bus système 126. A titre d'exemple, la mémoire volatile 124 est une mémoire à accès aléatoire.

L'unité de traitement 108 comprend, par exemple, en outre une mémoire non volatile 128 (NV MEM) couplée au bus système 126. A titre d'exemple, la mémoire non volatile 128 est une mémoire de type Flash.

Selon un mode de réalisation, le dispositif périphérique 102 est protégé par une valeur secrète afin de ne pouvoir être utilisé uniquement par un utilisateur ayant connaissance de la valeur secrète. A titre d'exemple, la valeur secrète est stockée dans une zone 130 (OTHER DATA) de la mémoire non volatile 128.

Selon un mode de réalisation, un utilisateur du dispositif périphérique 102 fait entrer, par exemple par l'intermédiaire d'une interface utilisateur (USER INTERFACE) 132 comprise dans l'unité de traitement 104, une valeur de vérification. L'appairage entre les dispositifs 100 et 102, ou la mise en service du dispositif 102, n'est alors possible uniquement lorsque la valeur de vérification correspond à la valeur secrète. A titre d'exemple, la valeur de vérification prend la forme d'un code pin ou d'un mot de passe saisi par l'utilisateur sur un clavier du dispositif 100 ou 102, ou encore un code fourni par une étiquette NFC lue par le dispositif 100 ou 102, ou par un code QR (de l'anglais « Quick Response Code »), scanné par le dispositif 100 ou 102.

L'interface utilisateur 132 prend par exemple la forme d'une interface numérique, ou tactile. Dans un autre exemple, l'interface 132 comprend un lecteur de code QR. Dans encore un autre exemple, l'interface 132 prend la forme d'un bouton et chaque chiffre d'un code pin peut par exemple être saisi en appuyant de façon répétée, par exemple quatre appuis répétés pour codifier le chiffre 4, et par exemple en marquant une pause entre deux saisies de chiffre. Bien que l'interface utilisateur 132 est illustrée comme faisant partie de l'unité de traitement 104, dans d'autres modes de réalisation, l'interface 132 pourrait faire partie d'un dispositif distinct en communication avec l'unité de traitement 104 et/ou 108. Par exemple, l'interface 132 est un dispositif mobile, tel que par exemple un smartphone, relié à l'unité de traitement 104 et/ou 108 par l'intermédiaire d'une liaison de communication, telle que par exemple une liaison WiFi, ou une liaison par NFC, etc. Le dispositif mobile exécute alors par exemple une application communiquant une valeur de vérification à l'unité de traitement 104 et/ou 108 via la liaison de communication. Il est également possible que l'interface 132 fasse partie du dispositif périphérique 102.

Selon un mode de réalisation, lorsqu'un utilisateur couple deux dispositifs 100 et 102 n'ayant pas été déjà appairé, une vérification est par exemple effectuée de la valeur de vérification. A titre d'exemple, le couplage entre les dispositifs 100 et 102 correspond à un branchement du dispositif périphérique 102 au dispositif hôte 100. Par exemple la batterie d'un vélo électrique est placée dans un emplacement dédié du vélo électrique, le branchement permettant en outre l'alimentation du vélo lorsque la procédure d'appairage est réussie. Dans un autre exemple le couplage correspond à l'établissement d'une liaison Bluetooth, par des moyens connus de la personne du métier, entre le dispositif hôte 100 et le dispositif périphérique 102. Dans d'autres exemples, le couplage entre le dispositif hôte 100 et le dispositif périphérique 102 se fait de manière automatique lorsque par exemple les deux dispositifs 100 et 102 sont à proximité.

Si la valeur de vérification correspond bien à la valeur secrète, les dispositifs 100 et 102 sont configurés pour générer une ou plusieurs clefs d'appairage. A titre d'exemple, la mémoire non volatiles 120 comprend des emplacements 134, 136 et 138 (SLOT1, SLOT2 et SLOTN) et la mémoire non volatile 130 comprend des emplacements 140, 142 et 144 (SLOT1, SLOT2, SLOT N). Chaque emplacement est par exemple configuré pour stocker une clef d'appairage.

Selon un mode de réalisation, le dispositif périphérique 102 est identifié de manière unique par un identifiant. En d'autres termes, deux dispositifs périphériques distincts sont chacun identifiés par un identifiant différent. A titre d'exemple, l'identifiant fait partie d'un certificat électronique par exemple stocké dans la zone 130 du dispositif périphérique 102. Du côté du dispositif hôte 100, les emplacements 134, 136 et 138 sont par exemple configurés pour stocker, en plus des clefs d'appairage, l'identifiant du dispositif périphérique correspondant.

Selon un mode de réalisation, la mémoire non volatile 120 comprend en outre une zone 146 (OTHER DATA). Les zones 130 et 146 stockent par exemple des clefs et/ou des certificats électroniques permettant au dispositif hôte 100 d'authentifier le dispositif périphérique 102. Par exemple, le certificat électronique inclut un identifiant propre au dispositif périphérique 102. A titre d'exemple, l'authentification est réalisée par le dispositif 100 pour chaque dispositif 102 auquel il est couplé mais pas appairé. L'authentification du dispositif périphérique 102 est par exemple réalisée avant que l'utilisateur fasse entrer la valeur de vérification. A titre d'exemple, dans le cas où l'authentification échoue, le bus 106 est configuré pour inhiber le fonctionnement de l'ensemble formé par les dispositifs 100 et 102.

Les zones mémoires 130 et 146 stockent par exemple en outre des codes informatiques contenant des instructions pour le fonctionnement des unités de traitement 104 et 108. Ces instructions sont par exemple respectivement chargées dans les mémoires volatiles 116 et 124 et exécutées par les processeurs 114 et 122.

De manière alternative, le dispositif hôte 100 et/ou le dispositif périphérique 102 comprennent en outre respectivement une unité d'authentification 148 et/ou 150 (AUTHENTICATION CHIP). Les unités d'authentification 148 et 150 sont par exemple respectivement couplées aux unités de traitement 114 et 122 des dispositifs 100 et 102 par l'intermédiaire de bus dédiés, tels que par exemple des bus de type I2C (de l'anglais « Inter Integrated Circuit »). Dans certains cas, l'unité d'authentification 148 comprend des emplacements configurés pour stocker des clefs d'appairage à la place des emplacements 134 à 138 et/ou 146 dans la mémoire non volatile 120. A titre d'exemple, chaque emplacement de l'unité d'authentification 148 est en outre configuré pour stocker, en plus d'une clef d'appairage, l'identifiant du dispositif périphérique appairé. De façon similaire, dans certains cas, l'unité d'authentification 150 comprend des emplacements configurés pour stocker des clefs d'appairage à la place des emplacements 140 à 144 et/ou 130 dans la mémoire non volatile 128. Les unités d'authentification 148 et 150 sont par exemple configurés en outre pour stocker les clefs et/ou les certificats électroniques permettant au dispositif hôte 100 d'authentifier le dispositif périphérique 102. A titre d'exemple les unités d'authentification 148 et 150 sont en outre configuré pour exécuter des opérations cryptographiques utilisant par exemple les clefs d'appairage et/ou les clefs privée et certificats électroniques.

De manière alternative, au lieu d'être stockée dans la zone 130, la valeur secrète comprise dans le dispositif périphérique 102 est stockée dans un autre emplacement mémoire, par exemple un emplacement de l'unité d'authentification 150.

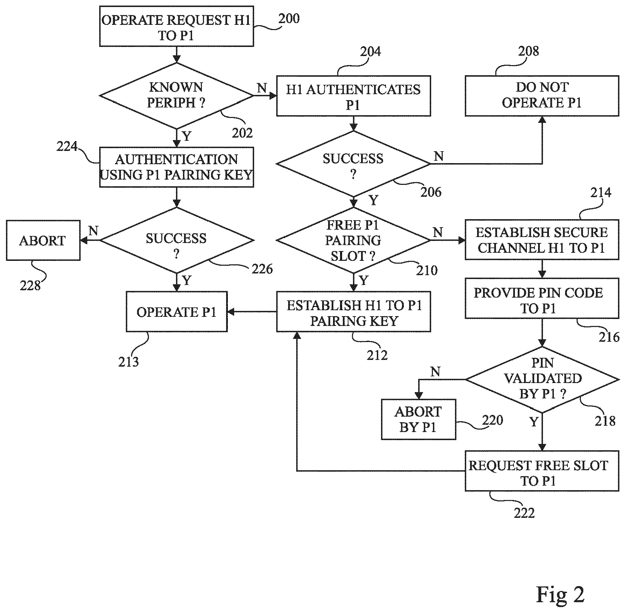

La figure 2 est un organigramme illustrant des étapes d'un procédé d'appairage mis en oeuvre par le dispositif hôte 100 selon un mode de réalisation de la présente description.

Dans une étape 200 (OPERATE REQUEST H1 TO P1), le dispositif hôte 100 initie une requête de fonctionnement au dispositif périphérique 102. A titre d'exemple, l'étape 200 fait suite au couplage entre les dispositifs 100 et 102. Bien que les dispositifs 100 et 102 sont en mesure de communiquer, le dispositif périphérique 102 est dans un état non actif, ne permettant pas l'utilisation des dispositifs 100 et 102 par l'utilisateur. A titre d'exemple, une batterie électrique dans un état non actif n'alimente pas le vélo électrique auquel elle est couplée.

Dans une étape 202 (KNOWN PERIPH?), le dispositif hôte 100 vérifie si le dispositif périphérique 102 a déjà été appairé. A titre d'exemple, le dispositif hôte 100 vérifie si un emplacement de la mémoire non volatile 120, ou alternativement de l'unité d'authentification 148, comprend une clef permettant l'appairage avec le dispositif périphérique 102. Par exemple, à chaque fois que le dispositif hôte 100 est appairé avec un dispositif périphérique tel que le périphérique 102, un identifiant du dispositif périphérique est stocké dans une mémoire non volatile du dispositif hôte 100 en association avec la clef d'appairage. Lorsqu'un dispositif périphérique est attaché au dispositif hôte 100, celui-ci lit l'identifiant du périphérique et vérifie dans la mémoire volatile concernée si un identifiant déjà stocké correspond. Lorsque l'identifiant lu correspond à un identifiant déjà stocké dans le dispositif hôte, cela veut dire que le périphérique a déjà été appairé au dispositif hôte 100. Dans le cas où l'identifiant ne correspond à aucun des identifiants stockés dans le dispositif hôte 100, cela veut dire que le dispositif périphérique n'a pas encore été appairé avec le dispositif hôte 100.S'il est déterminé, dans l'étape 202, que le dispositif périphérique 102 n'est pas connu (branche N), le procédé continue dans une étape 204 (H1 AUTHENTICATES P1).

L'étape 204 comprend une vérification d'authenticité du dispositif périphérique 102. A titre d'exemple, la vérification d'authenticité du dispositif périphérique 102 est effectuée en utilisant un certificat électronique, délivré par une autorité de certification, et une clef privée, stockés dans la mémoire non volatile 128 ou, de manière alternative, dans l'unité d'authentification 150.

A titre d'exemple, l'authentification du dispositif hôte 102 est effectuée selon une authentification à clef publique (PKA, de l'anglais « Public Key Authentification ») et selon un mécanisme de défi-réponse. Le dispositif périphérique 102 comprend par exemple une paire de clefs publique-privée ainsi qu'un certificat. Le certificat est par exemple généré et stocké en amont, par exemple lors de la fabrication du dispositif périphérique 102. Le dispositif hôte 100 reçoit par exemple la clef publique du dispositif périphérique 102 lors du premier appairage. L'authenticité du dispositif périphérique 102 est alors vérifiée par le dispositif hôte 100 à l'aide de sa clef publique stockée dans l'emplacement 146 ou dans l'unité d'authentification 148. Plus particulièrement, le dispositif hôte 100 envoi par exemple un défi au dispositif périphérique 102. Le processeur 122 chiffre le défi à l'aide de la clef privée et transmet une signature numérique au dispositif hôte 100. Le dispositif hôte 100 utilise alors sa clef publique pour vérifier la signature numérique. Dans le cas où le dispositif périphérique 102 n'est pas authentique, la clef privée qu'il comprend ne correspond par exemple pas à la clef publique du dispositif hôte 100 et l'authentification du dispositif périphérique 102 par le dispositif hôte 100 échoue.

A titre d'exemple, dans une étape 206 (SUCCESS?), le processeur 114 du dispositif hôte 100 détermine si le dispositif périphérique 102 est authentifié avec succès. Si ce n'est pas le cas (branche N), le procédé prend par exemple fin dans une étape 208 (DO NOT OPERATE P1) dans laquelle le dispositif périphérique 102 reste dans l'état non actif.

Si, dans l'étape 206, il est déterminé que le dispositif périphérique 102 est authentique (branche Y), le procédé continue dans une étape 210 (FREE P1 PAIRING SLOT?) . A titre d'exemple, dans l'étape 210, le dispositif hôte 100 envoie une requête au dispositif périphérique 102 afin de déterminer si au moins un des emplacements 140 à 144 de la mémoire non volatile 128, ou de manière alternative un emplacement de l'unité de traitement 150, est libre.

S'il est déterminé qu'un emplacement du dispositif périphérique 102 est libre (branche Y), le procédé continue dans une étape 212 (ESTABLISH H1 TO P1 PAIRING KEY). A titre d'exemple, dans l'étape 212, le processeur 114 génère une clef d'appairage et la stocke dans la mémoire non volatile 120 ou dans l'unité d'authentification 148. A titre d'exemple, la clef d'appairage est générée en parallèle, par le dispositif hôte 100 et par le dispositif périphérique 102, par l'intermédiaire d'un protocole d'accord de clefs, tel que par exemple un mécanisme d'accord de clefs de type Diffie-Hellman. Dans un autre exemple la clef d'appairage est générée par un protocole asymétrique, par exemple de type Master Key/Base Key. A titre d'exemple, l'étape 212 comprend en outre l'appairage du dispositif périphérique 102 avec le dispositif hôte 100.

Dans une étape 213 (OPERATE P1), le dispositif hôte 100 place en mode actif le dispositif périphérique 102. A titre d'exemple, dans le cas où le dispositif périphérique 102 est une batterie et le dispositif hôte 100 est un vélo électrique, l'étape 214 consiste en l'alimentation du vélo électrique par la batterie.

Si, lors de l'étape 210, il est déterminé que le dispositif périphérique 102 ne comprend pas d'emplacement libre (branche N), le procédé continue dans une étape 214 (ESTABLISH SECURE CHANNEL H1 TO P1). A titre d'exemple, un canal sécurisé reliant le dispositif hôte 100 au dispositif périphérique 102 est établi dans l'étape 214.

Dans une étape 216 (PROVIDE PIN CODE TO P1) , une valeur de vérification est faite entrée par l'utilisateur, par exemple dans le dispositif hôte 100, et est par exemple transmise au dispositif périphérique 102 par l'intermédiaire du canal sécurisé. Dans un autre exemple, la valeur de vérification est directement entrée dans le dispositif périphérique 102 par l'utilisateur.

La valeur de vérification est ensuite comparée, dans une étape 218 (PIN VALIDATED BY P1?), avec la valeur secrète stockée dans le dispositif périphérique 102. A titre d'exemple, la vérification est effectuée par le processeur 122 du dispositif périphérique 102.

Si la valeur de vérification entrée ne correspond pas à la valeur secrète du dispositif périphérique 102 (branche N), le procédé prend fin dans une étape 220 (ABORT BY P1) dans laquelle le dispositif périphérique 102 interrompt le procédé d'appairage, et le dispositif 102 reste dans l'état non actif. Le procédé reprend par exemple à l'étape 216, donnant une nouvelle chance à l'utilisateur de faire entrer la bonne valeur de vérification. A titre d'exemple, lorsque la valeur de vérification est à valeurs dans un espace de taille limité, comme par exemple un code pin, le dispositif hôte 100 est configuré pour bloquer le dispositif périphérique 102 suite à un nombre fixé en amont d'échec de vérification.

Dans un autre exemple, lorsque la valeur de vérification est à valeurs dans un espace de grande taille, comme par exemple un code QR ou une étiquette NFC représentées par 128 bits et pouvant prendre **2¹²⁸** valeurs différentes, le risque d'un appairage frauduleux en parcourant l'ensemble des valeurs possibles est faible. Par conséquent, le nombre de réalisation de l'étape 220 n'est, par exemple, pas limité par le dispositif hôte 100.

Si, lors de l'étape 218, la valeur de vérification est validée par le dispositif périphérique 102 (branche Y), le procédé continue dans une étape 222 (REQUEST FREE SLOT TO P1). A titre d'exemple, lors de l'étape 222, le dispositif hôte 100 envoie une requête au dispositif périphérique 102 afin que celui-ci mette un emplacement mémoire de la mémoire non volatile 122 ou de l'unité d'authentification 150 à disposition, par exemple en supprimant le contenu d'un emplacement existant.

Le procédé continue alors dans une nouvelle réalisation de l'étape 212. Le processeur 114 génère par exemple une clef d'appairage et la stocke dans la mémoire non volatile 120 ou, de manière alternative, dans l'unité d'authentification 148. Dans un autre exemple, la clef d'appairage est générée en parallèle, par les processeurs 114 et 122, par l'intermédiaire d'un protocole d'accord de clefs de type Diffie-Hellman ou par l'intermédiaire de tout autre protocole permettant la génération d'une clef d'appairage.

Dans le cas où, suite à la réalisation de l'étape 202, il est déterminé que le dispositif périphérique 102 est déjà appairé au dispositif hôte 100, le procédé continue dans une étape 224 (AUTHENTICATION USING P1 PAIRING KEY). A titre d'exemple, l'étape 224 consiste en une vérification de la clef d'appairage par dispositif hôte 100. Par exemple, dans certains cas, cette vérification est effectuée par une authentification défi-réponse. Le dispositif hôte 100 transmet un défi, correspondant à une valeur cryptée à l'aide de la clef d'appairage générée dans une réalisation de l'étape 212 lors d'une précédente réalisation du procédé d'appairage, au dispositif périphérique 102. Le dispositif périphérique 102 est alors configuré pour modifier la valeur du défi, en utilisant une clef d'appairage avec le dispositif hôte 100 qui lui est propre et retourner cette valeur modifiée comme réponse au dispositif hôte 100.

Le processeur 114 vérifie, dans une étape 226 (SUCCESS?), si la réponse retournée par le dispositif périphérique 102 est bien celle attendue. Si c'est le cas (branche Y), l'authentification est réussie et le procédé se termine dans une réalisation de l'étape 213. Dans le cas où l'authentification est un échec (branche N), le procédé se termine dans une étape 228 (ABORT) où le dispositif périphérique 102 reste dans l'état non actif.

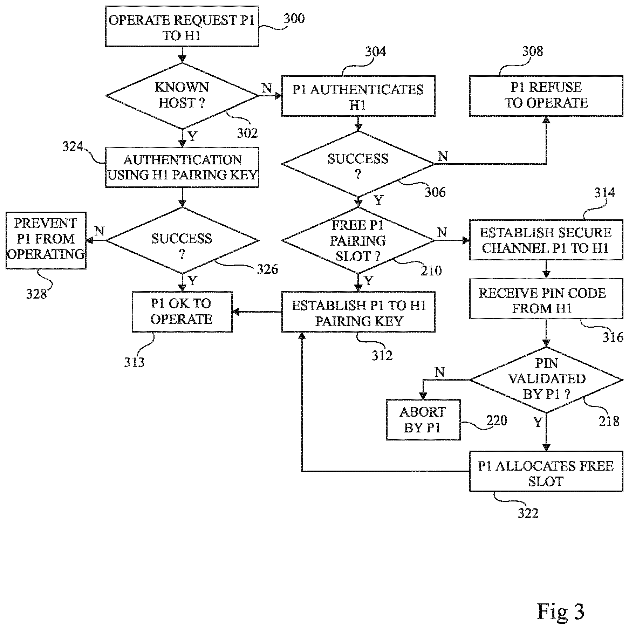

La figure 3 est un organigramme illustrant des étapes du procédé d'appairage qui sont mis en oeuvre par le dispositif périphérique 102 selon un mode de réalisation de la présente description. A titre d'exemple, ce procédé est réalisé en parallèle du procédé d'appairage réalisé par le dispositif hôte 100 et décrit en relation avec la figure 2.

Dans une étape 300 (OPERATE REQUEST P1 TO H1), le dispositif périphérique 102 est dans l'état non actif et initie une requête au dispositif périphérique 102 afin de passer dans l'état actif. A titre d'exemple, l'étape 300 fait suite au couplage entre les dispositifs 100 et 102 et est par exemple réalisé en réponse à l'étape 200.

Dans une étape 302 (KNOWN HOST?), le dispositif périphérique 102 vérifie si le dispositif hôte 100 a déjà été appairé. A titre d'exemple, le dispositif périphérique 102 vérifie si un emplacement de la mémoire non volatile 128, ou alternativement de l'unité d'authentification 150, comprend une clef permettant l'appairage avec le dispositif hôte 100.

S'il est déterminé, dans l'étape 302, que le dispositif hôte 100 n'est pas connu (branche N), le procédé continue dans une étape 304 (P1 AUTHENTICATES H1).

L'étape 304 comprend une vérification d'authenticité du dispositif hôte 100. A titre d'exemple, la vérification d'authenticité du dispositif hôte 100 est effectuée en utilisant un certificat électronique, délivré par une autorité de certification, et une clef privée, stockés dans la mémoire non volatile 120 ou, de manière alternative, dans l'unité d'authentification 148.

A titre d'exemple, dans une étape 306 (SUCCESS ?), le processeur 122 du dispositif périphérique 102 détermine si le dispositif hôte 100 est authentifié avec succès. Si ce n'est pas le cas (branche N), le procédé prend par exemple fin dans une étape 308 (P1 REFUSE TO OPERATE) dans laquelle le dispositif périphérique 102 reste dans l'état non actif.

Si, dans l'étape 306, il est déterminé que le dispositif hôte 100 est authentique (branche Y), le procédé continue dans la réalisation de l'étape 210 (FREE P1 PAIRING SLOT?) .

S'il est déterminé qu'un emplacement du dispositif périphérique 102 est libre (branche Y), le procédé continue dans une étape 314 (ESTABLISH P1 TO H1 PAIRING KEY). A titre d'exemple, dans l'étape 314, le processeur 122 génère une clef d'appairage et la stocke dans la mémoire non volatile 128 ou dans l'unité d'authentification 150. A titre d'exemple, la clef d'appairage est générée en parallèle, par le dispositif hôte 100 et par le dispositif périphérique 102, par l'intermédiaire d'un protocole d'accord de clefs de type Diffie-Hellman ou par l'intermédiaire de tout protocole permettant la génération d'une clef d'appairage. A titre d'exemple, l'étape 312 est réalisée en parallèle de l'étape 212 et comprend en outre l'appairage des dispositifs 100 et 102.

Dans une étape 313 (P1 OK TO OPERATE), le dispositif périphérique 102 informe par exemple le dispositif hôte 100 qu'il est prêt à passer à l'état actif. A titre d'exemple, l'étape 213 décrite en relation avec la figure 2 est exécutée directement en réponse à l'exécution de l'étape 313.

Si, lors de l'étape 210, il est déterminé que le dispositif périphérique 102 ne comprend pas d'emplacement libre (branche N), le procédé continue dans une étape 314 (ESTABLISH SECURE CHANNEL P1 TO H1). A titre d'exemple, un canal sécurisé reliant le dispositif périphérique 102 au dispositif hôte 100 est établi dans l'étape 314.

Dans une étape 316 (RECEIVE PIN CODE TO P1), la valeur de vérification faite entrée par l'utilisateur lors de l'étape 216, est reçue par le dispositif périphérique 102 par exemple par l'intermédiaire du canal sécurisé.

La valeur de vérification est ensuite comparée, dans la réalisation de l'étape 218 décrite en relation avec la figure 2.

Si la valeur de vérification entrée ne correspond pas à la valeur secrète du dispositif périphérique 102 (branche N), le procédé prend fin dans l'étape 220 et le dispositif 102 reste dans l'état non actif. Dans un autre exemple, le procédé reprend à l'étape 316, donnant une nouvelle chance à l'utilisateur de faire entrer la bonne valeur de vérification.

Si, lors de l'étape 218, la valeur de vérification est validée par le dispositif périphérique 102 (branche Y), le procédé continue dans une étape 322 (P1 ALLOCATES FREE SLOT). A titre d'exemple, l'étape 322 est réalisée en réponse à l'étape 222.

Le procédé continue alors dans une réalisation de l'étape 312.

Dans le cas où, suite à la réalisation de l'étape 302, il est déterminé que le dispositif hôte 100 est déjà appairé au dispositif périphérique 102, le procédé continue dans une étape 324 (AUTHENTICATION USING H1 PAIRING KEY). A titre d'exemple, l'étape 324 est réalisée en parallèle de l'étape 224 et consiste en une vérification de la clef d'appairage par dispositif périphérique 102. Par exemple, dans certains cas, cette vérification est effectuée par une authentification défi-réponse. Le dispositif périphérique 102 transmet un défi, correspondant à une valeur cryptée à l'aide de la clef d'appairage générée dans une réalisation de l'étape 312 lors d'une précédente réalisation du procédé d'appairage, au dispositif hôte 100. Le dispositif hôte 100 est alors configuré pour modifier la valeur du défi, en utilisant la clef d'appairage générée dans une réalisation de l'étape 212, et retourner cette valeur modifiée comme réponse au dispositif périphérique 102.

Le processeur 122 vérifie, dans une étape 326 (SUCCESS?), si la réponse retournée par le dispositif hôte 100 est bien celle attendue. Si c'est le cas (branche Y), l'authentification est réussie et le procédé se termine dans une réalisation de l'étape 313. Dans le cas où l'authentification est un échec (branche N), le procédé se termine dans une étape 328 (PREVENT P1 FROM OPERATING) dans laquelle le dispositif périphérique 102 est maintenu dans l'état non actif.

Bien que les étapes d'authentification 204 et 304 aient été écrites, l'étape 304 peut être omise dans certains modes de réalisations. Uniquement le dispositif périphérique 102 est alors authentifié. Dans ce cas, le dispositif hôte 100 ne comprend par exemple pas de certificats électroniques.

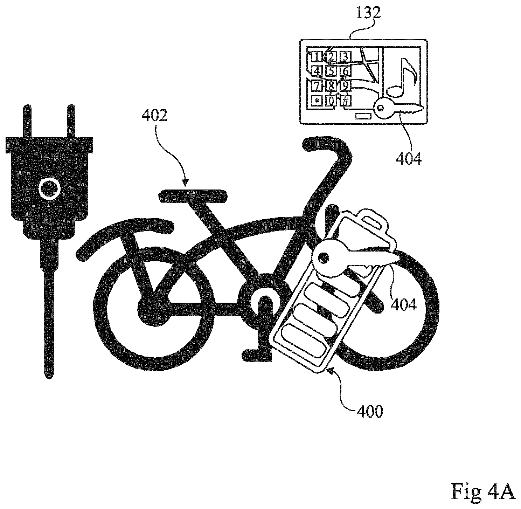

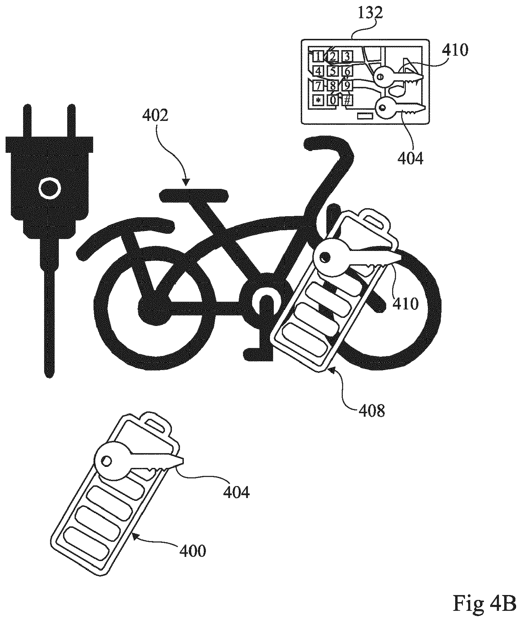

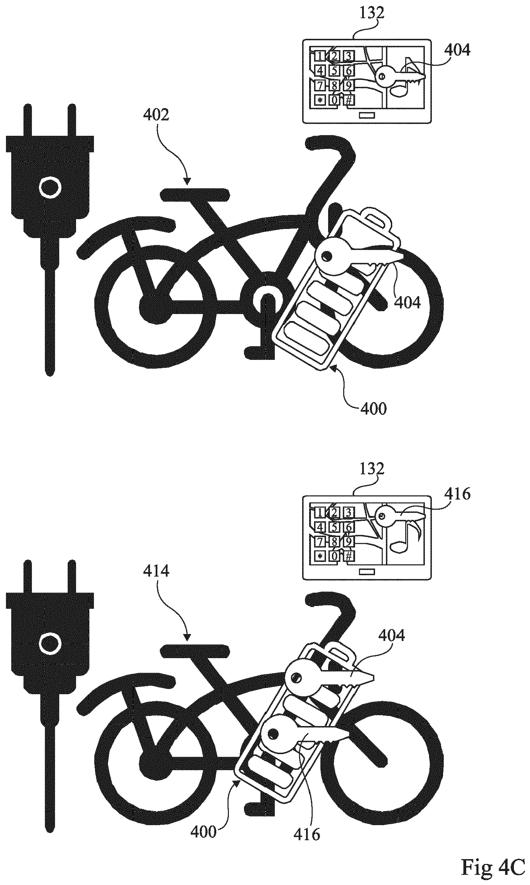

Les figures 4A, 4B et 4C illustrent des cas d'utilisation et d'appairage entre des dispositifs hôtes et de dispositifs périphériques. En particulier, ces figures illustrent un exemple d'appairage entre une batterie 400 correspondant au dispositif périphérique 102 et un vélo 402 correspondant au dispositif hôte 100 (figure 4A), entre une batterie 408 correspondant à un autre dispositif périphérique 102 et le vélo 402 (figure 4B), et entre la batterie 400 et un autre vélo 414 (figure 4C) selon un mode de réalisation de la présente description. Les personnes du métier sauront adapter cet exemple à d'autres types de dispositif hôte 100 et/ou de dispositif périphérique 102.

Dans l'exemple de la figure 4A, le vélo 402 comprend une réalisation graphique de l'interface 132, par exemple sous forme d'un écran tactile. Par exemple, l'écran tactile peut être utilisé en outre comme interface d'une application GPS et/ou d'une application audio. A titre d'exemple, la valeur de vérification prend la forme d'un code pin pouvant être saisi par l'intermédiaire d'un clavier numérique s'affichant sur l'écran tactile lorsqu'une batterie est insérée dans le vélo 402 mais n'est pas encore appairée au vélo 402.

A titre d'exemple, la batterie 400 a préalablement été authentifiée par le vélo électrique 402 dans une réalisation de l'étape 204 de la figure 2.

L'utilisateur du vélo 402 a, par exemple, saisi dans l'interface 132 la valeur de vérification correspondant à la valeur secrète stockée dans une mémoire non volatile ou, de manière alternative, dans l'unité d'authentification 150 de la batterie 400.

Selon un mode de réalisation, la batterie 400 et/ou le vélo 402 sont configurés pour générer au moins une clef d'appairage dans des réalisations des étapes 212 et 312 des figures 2 et 3. Une clef d'appairage 404 est alors stockée dans un emplacement de la mémoire non volatile 120, ou de l'unité d'authentification 148, du vélo 402 ainsi que dans un emplacement de la mémoire non volatile 128, ou de l'unité d'authentification 150, de la batterie 400.

A titre d'exemple, la clef 404 est générée par l'intermédiaire d'un protocole d'accord de clefs de type Diffie-Hellman, ou par l'intermédiaire d'un autre protocole permettant la génération d'une clef d'appairage.

La figure 4B illustre un exemple d'appairage entre une nouvelle batterie 408 et le vélo 402 selon un mode de réalisation de la présente description.

A titre d'exemple, le vélo 402 est toujours appairé avec la batterie 400 et l'utilisateur du vélo 402 souhaite l'appairer avec la nouvelle batterie 408. L'utilisateur peut, par exemple, vouloir pouvoir utiliser une deuxième batterie sur son vélo lorsque la première est déchargée ou en cours de rechargement.

A titre d'exemple, la clef privée et le certificat électronique stockés dans la batterie 408 diffèrent de ceux stockés dans la batterie 400.

La valeur secrète stockée dans la batterie 408 est par exemple différente de la valeur secrète stockée dans la batterie 400. Ainsi, lors de la réalisation de l'étape 216 de la figure 2, l'utilisateur saisit par exemple un nouveau code pin sur l'interface 132 du vélo 402. Si le code pin correspond bien à la valeur secrète associée à la batterie 408, le vélo 402 et la batterie 400 stockent une clef d'appairage 410.

Le vélo 402 stocke alors deux clefs d'appairage différentes 404 et 410. La clef 404 permet au vélo 402 d'être utilisé en association avec la batterie 400 et la clef 410 permet au vélo 402 d'être utilisé en association avec la batterie 408.

La figure 4C illustre un exemple d'appairage entre la batterie 200 et un nouveau vélo 214 selon un mode de réalisation de la présente description.

A titre d'exemple, la batterie 400 est toujours appairée avec le vélo 400 et un utilisateur de la batterie 400 souhaite l'appairer avec le nouveau vélo 414.

L'utilisateur saisit par exemple, sur l'interface 132 du nouveau vélo 414, le code pin correspondant à la valeur secrète stockée dans la mémoire non volatile 128, ou dans l'unité d'authentification 150, de la batterie 400. Une nouvelle clef d'appairage 416 est alors stockée dans le vélo 414 et dans la batterie 400. Le vélo 414 est alors par exemple uniquement appairé à la batterie 400 tandis que la batterie 400 est appairée aux vélos 402 et 414.

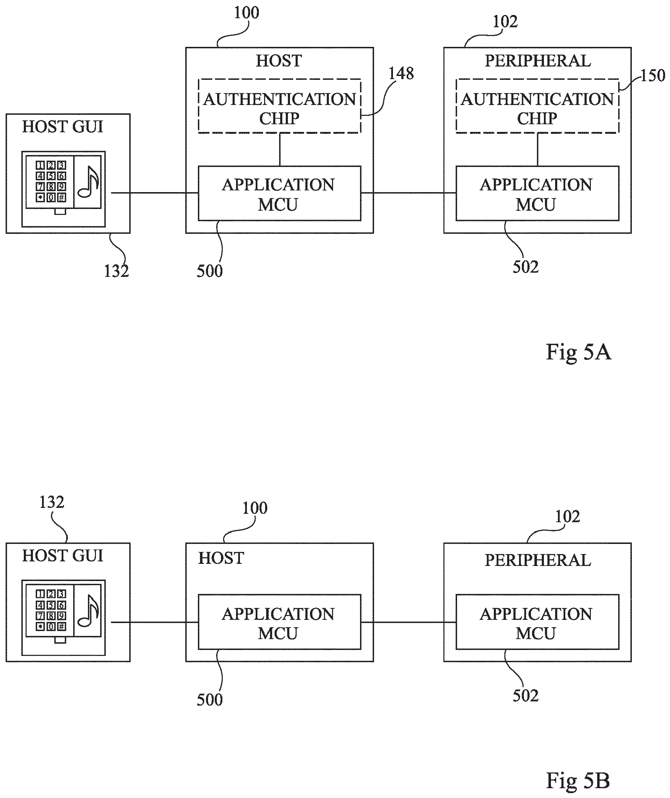

Les figures 5A à 5D illustrent des exemples d'architecture systèmes des dispositifs 100 et 102.

Dans l'exemple illustré par la figure 5A, le dispositif hôte (HOST) 100 comprend l'unité d'authentification (AUTHENTICATION CHIP) 148 et le dispositif périphérique (PERIPHERAL) 102 comprend l'unité d'authentification (ATHENTICATION CHIP) 150. Les unités d'authentification 148 et 150 stockent par exemple les clefs privées et certificats électroniques ainsi que les clefs d'appairage générées dans les étapes 212 et 312 respectivement décrites en relation avec les figures 2 et 3. L'unité d'authentification 150 stockent en outre la valeur secrète associée au dispositif périphérique 102.

La mémoire non volatile 120 du dispositif hôte 100 stocke par exemple des codes applicatifs 500 (APPLICATION MCU). Les codes applicatifs 500 comprennent par exemple des instructions, qui lorsque qu'elles sont chargées dans la mémoire volatile 116, commandent l'exécutions par le processeur 114 des étapes 200 à 228 décrites en relation avec la figure 2.

La mémoire non volatile 128 du dispositif périphérique 102 stocke par exemple d'autres codes applicatifs 502 (APPLICATION MCU). Les codes applicatifs 502 comprennent par exemple des instructions, qui lorsque qu'elles sont chargées dans la mémoire volatile 124, commandent l'exécutions par le processeur 122 des étapes 300 à 328 décrites en relation avec la figure 3.

Les codes 500 et 502 sont par exemple configurés pour commander l'envoi de requêtes aux unités 148 et 150 afin que ces dernières communiquent les clefs privées et/ou les certificats lors de la réalisation des étapes d'authentification 204 et 304. Les codes 500 et 502 sont par exemple en outre configurés pour commander le stockage des clefs d'appairage dans les unités 148 et 150 lors de la réalisation de l'étape 212. Les codes 500 et 502 sont par exemple en outre configurés pour commander l'envoi de requêtes aux unités 148 et 150 afin que ces dernières communiquent les clefs d'appairage au processeurs 114 et 122 lors de la réalisation des étapes 224 et 324.

Dans l'exemple illustré par la figure 5B, le dispositif hôte 100 ne comprend pas l'unité d'authentification 148 et le dispositif périphérique 102 ne comprend pas l'unité d'authentification 150. Les clefs d'appairage sont alors stockées dans les emplacements 134 à 138 de la mémoire non volatile 120 et dans les emplacements 140 à 144 de la mémoire non volatile 128. Des clefs privées et certificats sont par exemple stockés dans les zones 130 et 146. En outre la zone 130 stocke la valeur secrète associée au dispositif périphérique 102.

Les étapes 200 à 228 et 300 à 328 décrites en relation avec les figures 2 et 3 sont alors exécutées par les processeurs 114 et 122 lors de l'exécution des codes correspondants 500 et 502. Les code 500 et 502 sont alors configurés pour commander aux mémoire non volatiles 120 et 128 la provision, aux processeurs 114 et 122, des clefs d'appairage et/ou clefs privées et/ou certificat et ou de la valeur secrète

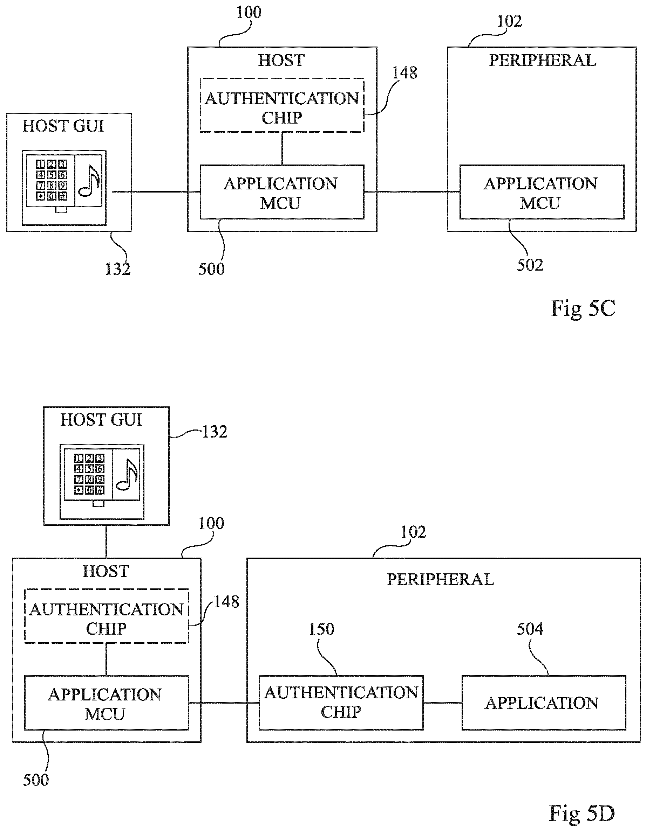

Dans l'exemple illustré par la figure 5C, l'architecture système du dispositif hôte 100 est identique à celle décrite en relation avec la figure 5A. L'architecture système du dispositif périphérique 102 est identique à celle décrite en relation avec la figure 5B.

Ainsi les clefs d'appairage, les clefs privées et certificats du dispositif hôte 100 sont stockés dans l'unité d'authentification 148. Les clefs d'appairage, les clefs privées et certificats du dispositif périphérique 102 sont stockés dans la mémoire non volatile 128.

Dans l'exemple illustré par la figure 5D, l'architecture système du dispositif hôte 100 est identique à celle décrire en relation avec la figure 5A. Le dispositif périphérique 102 ne comprend par exemple pas l'unité de traitement 108. Les clefs d'appairage, clefs privées et certificats du dispositif périphérique 102 sont alors stockés dans l'unité d'authentification 150.

Les codes applicatifs 500 du dispositif hôte 100 sont alors configurés pour communiquer avec les unités d'authentification 148 et 150 afin de commander la fourniture des clefs d'appairage, de la clef privée et du certificat au processeur 114.

Dans l'exemple illustré par la figure 5D, les étapes 304 et 324 décrites en relation avec la figure 3 sont par exemple omises. Les étapes 218 et 312 sont par exemple réalisées par le processeur 114.

Le dispositif périphérique 102 comprend en outre un élément 504 (APPLICATION) configuré pour placer le dispositif 102 dans l'état actif, ou le laisser dans l'état non actif. A titre d'exemple l'élément 504 est un logiciel configuré pour commander un interrupteur qui, lorsqu'il est ouvert, place le dispositif périphérique 102 dans l'état non actif et qui, lorsqu'il est fermé, place le dispositif périphérique 102 dans l'état actif.

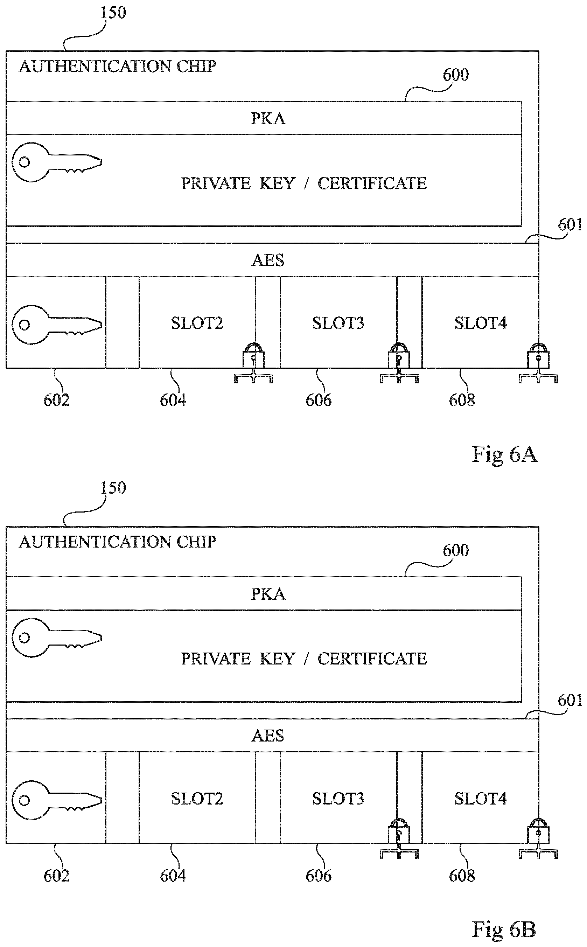

Les figures 6A et 6B sont des schémas par bloc illustrant des exemples de l'unité d'authentification 150 (AUTHENTICATION CHIP) selon un mode de réalisation de la présente description

En particulier, l'unité d'authentification 150 comprend un circuit d'authentification par clef publique 600 (PKA). Le circuit 600 comprend par exemple une mémoire non volatile configurée pour stocker les clefs privées et les certificats (PRIVATE KEY/CERTIFICATE) par exemple utilisés pour l'authentification du dispositif hôte 100 et/ou du dispositif périphérique 102. A titre d'exemple, l'authentification du dispositif hôte 100 et/ou du dispositif périphérique 102 est une authentification par clef publique (PKA, de l'anglais « Public Key Authentication »).

L'unité d'authentification 150 comprend un circuit de chiffrement AES 601 ayant une mémoire non volatile comprenant des emplacements 602, 604 (SLOT2), 606 (SLOT3) et 608 (SLOT4) configurés pour stocker les clefs d'appairage. A titre d'exemple, l'emplacement 602 stocke une clef d'appairage avec un dispositif hôte 100 tandis que les emplacements 604 à 608 sont vides. Bien que l'unité d'authentification 150 illustrés par les figures 6A et 6B comprend quatre emplacements, une unité d'authentification 150 peut bien sûr comprendre un nombre plus élevé d'emplacement mémoire configurés pour stocker les clefs d'appairage. A titre d'exemple l'unité d'authentification 150 peut comprendre plusieurs centaines d'emplacements.

A titre d'exemple, les clefs d'appairage sont utilisées dans des opérations de cryptographie symétrique, telles que par exemple des opérations d'un algorithme de type AES.

Dans l'exemple illustré par la figure 6A les emplacements 604 à 608 sont par exemple verrouillé. A titre d'exemple, un des emplacements 604 à 608 est déverrouillé dans une réalisation de l'étape 322 suite à l'entrée, par l'utilisateur d'une valeur de vérification correcte.

Dans un autre exemple, les emplacements 604 à 608 stockent déjà des clefs d'appairage. Un appairage du dispositif 102 avec un nouveau dispositif 100 entraîne par exemple la suppression d'une des clefs stockées dans un des emplacements 604 à 608.

La figure 6B illustre l'unité d'authentification 150 dans laquelle l'emplacement 604 a été déverrouillé. L'emplacement 604 est alors considéré comme étant libre et une nouvelle clef d'appairage peut être stocker dedans.

Selon un mode de réalisation, le contenu des emplacements 602 à 608 peut être réinitialisé. A titre d'exemple, les emplacements sont réinitialisés lorsque le dispositif périphérique 102 est cédé à un nouvel utilisateur.

Un avantage des modes de réalisation décrits est qu'ils permettent uniquement à un utilisateur ayant connaissance de la valeur secrète d'appairer le dispositif 102 au dispositif hôte 100. De même, un dispositif hôte 100 peut être appairer simultanément avec plusieurs dispositifs périphériques 102. De même, un dispositif périphérique 102 peut être appairé, simultanément, avec plusieurs dispositifs hôte 100. Les modes de réalisation décrits n'apportent par exemple pas de contrainte d'utilisation, autre que l'insertion d'une valeur de vérification lors du premier appairage entre un dispositif hôte et un dispositif périphérique.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les techniques d'authentification des dispositifs 100 et 102 peuvent varier.

Enfin, la mise en oeuvre pratique des modes de réalisation et variantes décrits est à la portée de la personne du métier à partir des indications fonctionnelles données ci-dessus. En particulier, pour ce qui est des architectures système des dispositifs hôtes et périphériques. De même, le nombre de clefs d'appairage pouvant être stockées dans les dispositifs hôtes et périphériques peut varier, par exemple en fonction de l'usage des dispositifs. L'implémentation de l'interface utilisateur peut aussi varier.

## Revendications

1. Procédé d'appairage entre un premier dispositif hôte (100, 402) et un premier dispositif périphérique (102, 400), comprenant :
- faire entrer, dans le premier dispositif périphérique et par un utilisateur du premier dispositif hôte, une valeur de vérification ;
- la comparaison, par le premier dispositif périphérique, entre la valeur de vérification et une première valeur secrète stockée dans une mémoire (128, 150) du premier dispositif périphérique ; et
- si la valeur de vérification correspond à la première valeur secrète, le calcul et le stockage d'une première clef d'appairage (404) par le premier dispositif hôte et le premier dispositif périphérique afin d'effectuer l'appairage.

2. Procédé selon la revendication 1, comprenant en outre, si la valeur de vérification correspond à la première valeur secrète, l'établissement d'un canal sécurisé entre le premier dispositif périphérique (102, 400) et le premier dispositif hôte (100, 402).

3. Procédé selon la revendication 1 ou 2, comprenant, suite à l'appairage du premier dispositif hôte (100, 402) avec le premier dispositif périphérique (102, 400) :
- le placement du premier dispositif périphérique dans un état de désactivation ;
- la transmission par le premier dispositif hôte d'une demande d'activation au premier dispositif périphérique, sur la base de la première clef d'appairage (404) ; et
- l'activation du premier dispositif périphérique sur la base d'une vérification de la demande.

4. Procédé selon l'une quelconque des revendications 1 à 3, comprenant en outre, avant l'entrée de la valeur de vérification, une vérification de l'authenticité du premier dispositif périphérique (102) sur la base d'une valeur d'authenticité.

5. Procédé selon la revendication 4, dans lequel la première clef d'appairage (404) est générée en parallèle par le premier dispositif périphérique (102, 400) et par le premier dispositif hôte (100, 402) sur la base de la première valeur secrète et/ou de la valeur d'authenticité et est stockée dans un premier emplacement (140, 602) d'une mémoire non volatile (128, 150) du premier dispositif périphérique et dans un premier emplacement (134) d'une mémoire non volatile (120, 148) du premier dispositif hôte.

6. Procédé selon l'une quelconque des revendications 1 à 5, dans lequel la première valeur secrète est stockée de manière cryptée dans une mémoire non volatile (128, 150) du premier dispositif périphérique (102, 400).

7. Procédé selon l'une quelconque des revendications 1 à 6, dans lequel la valeur de vérification est un code pin.

8. Procédé selon l'une quelconque des revendications 1 à 6, dans lequel la valeur de vérification est une étiquette NFC.

9. Procédé selon l'une quelconque des revendications 1 à 8, dans lequel le premier dispositif hôte (100, 402) et le premier dispositif périphérique (102, 400) sont couplés par l'intermédiaire d'un bus (106) de type I2C.

10. Procédé selon l'une quelconque des revendications 1 à 9 comprenant en outre l'appairage entre le premier dispositif hôte (100, 402) et un deuxième dispositif périphérique (408), en faisant :
- entrer, par un utilisateur du premier dispositif hôte, une valeur de vérification ;
- la comparaison, par le deuxième dispositif périphérique, entre la valeur de vérification et une deuxième valeur secrète stockée dans une mémoire du deuxième dispositif périphérique ; et
- si la valeur de vérification correspond à la deuxième valeur secrète, le calcul et le stockage d'une deuxième clef d'appairage (410) par le premier dispositif hôte et le deuxième dispositif périphérique afin d'effectuer l'appairage.

11. Procédé selon l'une quelconque des revendications 1 à 10, comprenant en outre l'appairage entre un deuxième dispositif hôte (414) et le premier dispositif périphérique (102, 400), en faisant :
- entrer, par un utilisateur du deuxième dispositif hôte, une valeur de vérification ;
- la comparaison, par le premier dispositif périphérique, entre la valeur de vérification et la première valeur secrète ; et
- si la valeur de vérification correspond à la première valeur secrète, le calcul et le stockage d'une troisième clef d'appairage (416) par le deuxième dispositif hôte et le premier dispositif périphérique afin d'effectuer l'appairage.

12. Premier dispositif hôte (100, 402) configuré pour :
- transmettre à un dispositif périphérique (102, 400, 408) une valeur de vérification faite entrée dans le premier dispositif périphérique par un utilisateur ; et
- calculer et stocker une clef d'appairage (404, 410, 416) afin d'effectuer un appairage entre le premier dispositif hôte et le dispositif périphérique.

13. Premier dispositif périphérique (102, 400) configuré pour :
- comparer une valeur de vérification, faite entrée par un utilisateur d'un dispositif hôte (100, 402, 414) dans le premier dispositif périphérique, avec une valeur secrète stockée dans une mémoire non volatile (128, 150) du premier dispositif périphérique ;
- si la valeur de vérification correspond à la valeur secrète, calculer et stocker une première clef d'appairage (404, 410, 416) afin d'effectuer un appairage entre le dispositif hôte et le premier dispositif périphérique.

14. Système comprenant le premier dispositif hôte (100, 402, 414) selon la revendication 12 et le premier dispositif périphérique (102, 400, 408) selon la revendication 13.

15. Système selon la revendication 14, comprenant en outre un deuxième dispositif hôte (414) et un deuxième dispositif périphérique (408), le premier dispositif périphérique (102, 400) étant en outre configuré pour effectuer un appairage avec le deuxième dispositif hôte et le deuxième dispositif périphérique étant en outre configuré pour effectuer un appairage avec le premier dispositif hôte (100, 402).
